# EUROPEAN PATENT APPLICATION

(11) **EP 4 198 777 A1**
(43) Date of publication of application: **21.06.2023**
(21) Application number: 22203369.8
(22) Date of filing: 24.10.2022
(51) Int. Cl.: G06F 18/23, G06F 18/25, G06F 18/2135, G06F 18/2132, G06F 18/20

(54) **SAMPLE CLASSIFICATION METHOD AND APPARATUS, ELECTRONIC DEVICE AND STORAGE MEDIUM**

(30) Priority: 14.12.2021 CN 202111525874
(71) Applicant: Beijing Baidu Netcom Science Technology Co., Ltd., Beijing 100085 (CN)
(72) Inventor: LIU, Haocheng, Beijing, 100085 (CN)
(74) Representative: Zimmermann, Tankred Klaus

(57) **Abstract**

The present invention provides a sample classification method and apparatus, an electronic device and a storage medium, and relate to the technical field of data mining, in particular to the field of machine learning. The method includes that: a sample to be classified is acquired, and a sample feature dimension of the sample to be classified is greater than a preset threshold; feature encoding is performed on a sample feature of the sample to be classified according to various feature encoding modes to obtain multiple feature vectors; and clustering analysis is performed on the multiple feature vectors to determine a target class of the sample to be classified.

## Description

### Technical Field

The present invention relates to the technical field of data mining, further relates to the field of machining learning, and in particular to a sample classification method and apparatus, an electronic device and a storage medium.

### Background

Clustering analysis refers to an analytical process of grouping a set of physical or abstract objects to form multiple classes, each of which includes similar objects selected from the set of physical or abstract objects.

In a related solution, a K-means clustering algorithm is used for describing data samples, measure a similarity between each two sample of the data samples, and classify the data samples into different clusters. However, during clustering of samples with high-dimensional features, the K-means clustering algorithm may cluster unrelated samples together, resulting in a poor clustering effect.

### Summary

At least some embodiments of the present invention provide a sample classification method and apparatus, an electronic device and a storage medium, so as at least to solve a technical problem of low accuracy during clustering of samples with high-dimensional features in the related art.

In an embodiment of the present invention, a sample classification method is provided, including: acquiring a sample to be classified, and a sample feature dimension of the sample to be classified is greater than a preset threshold; performing feature encoding on a sample feature of the sample to be classified according to various feature encoding modes to obtain multiple feature vectors; and performing clustering analysis on the multiple feature vectors to determine a target class of the sample to be classified.

According to another aspect of the present invention, a sample classification apparatus is provided, including: an acquisition module configured to acquiring a sample to be classified, and a sample feature dimension of the sample to be classified is greater than a preset threshold; an encoding module configured to performing feature encoding on a sample feature of the sample to be classified according to various feature encoding modes to obtain multiple feature vectors; and a clustering module configured to performing clustering analysis on the multiple feature vectors to determine a target class of the sample to be classified.

In another embodiment of the present invention, an electronic device is provided, including: at least one processor; and a memory in communication connection with the at least one processor, and the memory stores at least one instruction to be executed by the at least one processor; the at least one instruction, when executed by the at least one processor, causes the at least one processor to implement the sample classification method provided in the present invention.

In another embodiment of the present invention, a non-transitory computer-readable storage medium, and the at least one computer instruction is used for enabling a computer to implement the sample classification method provided in the present invention.

In another embodiment of the present invention, a computer program product is provided, including a computer program which, when executed by a processor, implements the sample classification method provided in the present invention.

Through the present invention, a sample to be classified is acquired, the sample feature dimension of the sample to be classified is greater than a preset threshold, feature encoding is performed on a sample feature of the sample to be classified according to various feature encoding modes to obtain multiple feature vectors, and finally clustering analysis is performed on the multiple feature vectors to determine a target class of the sample to be classified, a purpose of quickly and accurately determining the target class of the sample to be classified is achieved, and an effect of improving the accuracy of clustering of samples with high-dimensional features is achieved, thus solving the technical problem of low accuracy of clustering of the samples with high-dimensional features in the related solution.

It should be understood that the content described in this section is not intended to identify key or important features of the embodiments of the present invention, nor is it intended to limit the scope of the present invention. Other features of the present invention will be easily understood through the following specification.

### Brief Description of the Drawings

The accompanying drawings are used for better understanding of this solution, and do not constitute a limitation to the present invention.
Fig. 1 is a block diagram of a hardware structure of a computer terminal (or a mobile device) configured to implement a sample classification method according to an embodiment of the present invention.
Fig. 2 is a flow chart of a sample classification method according to an embodiment of the present invention.
Fig. 3 is a schematic diagram of a sample classification method according to an embodiment of the present invention.
Fig. 4 is a block structural diagram of a sample classification apparatus according to an embodiment of the present invention.

### Detailed Description

Exemplary embodiments of the present invention are described below with reference to the accompanying drawings, which include various details of the embodiments of the present invention to facilitate understanding and should be considered as exemplary. Accordingly, those of ordinary skill in the art will recognize that various changes and modifications of the embodiments described herein can be made without departing from the scope and spirit of the present invention. Also, descriptions of well-known functions and structures are omitted from the following description for clarity and conciseness.

It should be noted that the terms "first", "second", etc. in the specification and claims of the present invention and the above drawings are used to distinguish similar objects, and do not have to be used for describing a specific order or sequence. It should be understood that the data used in this way are interchangeable under appropriate circumstances so that the embodiments of the present invention described herein can be implemented in an order other than those illustrated or described herein. In addition, the terms "include" and "have" as well as any of their variations are intended to cover non-exclusive inclusions. For example, processes, methods, systems, products, or devices that include a series of steps or units are not necessarily limited to those steps or units clearly listed below, but may include other steps or units that are not clearly listed or are inherent to these processes, methods, products, or devices.

An implementation process of a K-means clustering algorithm is as follows. First, samples are scanned one by one, and each sample is classified to a previous class or a new class is generated according to a distance between the sample and a sample that has been scanned. Second, the acquired classes are combined according to an inter-class distance, and the combination is stopped according to a certain preset standard. However, during clustering of samples with high-dimensional features, the K-means clustering algorithm may cluster unrelated samples together, resulting in a poor clustering effect.

According to an embodiment of the present invention, a sample classification method is provided. It should be noted that steps shown in the flow of the drawings may be executed in a computer system with a group of computer-executable instructions. In addition, although a logic order is shown in the flowchart, in some cases, the steps shown or described can be executed in an order different from that herein.

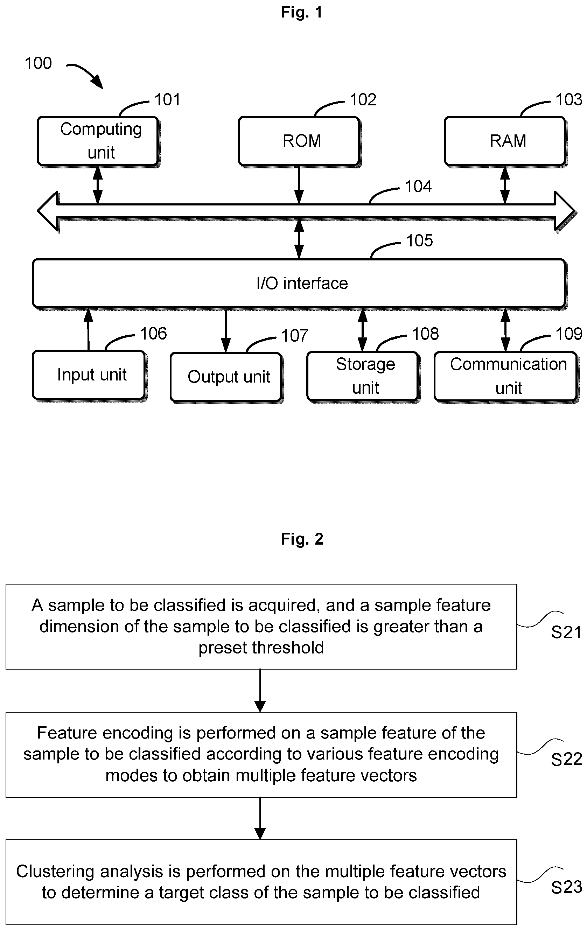

The method embodiment provided in the present invention can be implemented in a mobile terminal, a computer terminal or a similar electronic device. The electronic device aims to represents various types of digital computers, such as a laptop computer, a desktop computer, a workstation, a personal digital assistant, a server, a blade server, a mainframe computer, and other suitable computers. The electronic device may also represent various forms of mobile devices, such as personal digital processing, a cellular phone, a smart phone, a wearable device, and other similar computing devices. The components shown herein, their connections and relationships, and their functions are examples, and are not intended to limit the implementation of the present invention described and/or required herein. Fig. 1 shows a block diagram of a hardware structure of a computer terminal (or a mobile device) configured to implement a sample classification method according to an embodiment of the present invention.

As shown in Fig. 1, the computer terminal 100 includes a computing unit 101, which can execute various appropriate actions and processing according to computer programs that are stored in a read-only memory (ROM) 102 or computer programs loaded from a storage unit 108 into a random access memory (RAM) 103. Various programs and data required for operations of the computer terminal 100 are also stored in the RAM 103. The computing unit 101, the ROM 102, and the RAM 103 are connected by means of a bus 104. An input/output (I/O) interface 105 is also connected to the bus 104. Various components in the computer terminal 100 are connected to the I/O interface 105, including: an input unit 106, such as a keyboard and a mouse; an output unit 107, such as various types of displays and speakers; a storage unit 108, such as a magnetic disk and an optical disk; and a communication unit 109, such as a network card, a modem, and a wireless communication transceiver. The communication unit 109 allows the computer terminal 100 to exchange information or data with other devices through a computer network such as the Internet and/or various telecommunication networks.

The computing unit 101 may be various general-purpose and/or special-purpose processing components with processing and computing capabilities. Some examples of the computing unit 101 include, but are not limited to, a central processing unit (CPU), a graphics processing unit (GPU), various dedicated artificial intelligence (Al) computing chips, various computing units that run machine learning model algorithms, a digital signal processing (DSP), and any appropriate processor, controller, microcontroller, etc. The computing unit 101 implements a sample classification method described herein. For example, in some embodiments, the sample classification method may be implemented as a computer software program, which is tangibly contained in a machine-readable medium, such as the storage unit 108. In some embodiments, part or all of the computer programs may be loaded and/or installed on the computer terminal 100 via the ROM 102 and/or the communication unit 109. When the computer program is loaded to the RAM 103 and executed by the computing unit 101, at least one step of the sample classification method described herein can be executed. Alternatively, in other embodiments, the computing unit 101 may be configured to execute the sample classification method in any other suitable manner (for example, by means of firmware).

Various implementations of the systems and technologies described herein can be implemented in a digital electronic circuit system, an integrated circuit system, a field programmable gate arrays (FPGA), an application specific integrated circuit (ASIC), an application-specific standard product (ASSP), a system-on-chip (SOC), a load programmable logic device (CPLD), computer hardware, firmware, software, and/or their combination. These various implementations may include: being implemented in at least one computer program. The at least one computer program may be executed and/or interpreted on a programmable system including at least one programmable processor. The programmable processor may be a dedicated or general-purpose programmable processor that can receive data and instructions from the storage system, at least one input device, and at least one output device, and transmit the data and instructions to the storage system, the at least one input device, and the at least one output device.

It should be noted here that, in some optional embodiments, the electronic device shown in Fig. 1 may include a hardware element (including a circuit), a software element (including a computer code stored on a computer-readable medium), or a combination of both a hardware element and a software element. It should be pointed out that Fig. 1 is an example of a particular specific example, and aims to show types of components in the electronic device.

In the above-mentioned running environment, the present invention provides a sample classification method shown in Fig. 2. The method can be implemented by a computer terminal or a similar electronic device shown in Fig. 1. Fig. 2 is a flow chart of a sample classification method provided according to an embodiment of the present invention. As shown in Fig. 2, the method may include the following steps.

In step S21, a sample to be classified is acquired, and a sample feature dimension of the sample to be classified is greater than a preset threshold.

For example, the preset threshold is 10,000 dimensions. The sample feature dimension of the acquired sample to be classified is greater than 10,000 dimensions. Each sample to be classified has a high-dimensional sample feature.

In step S22, feature encoding is performed on a sample feature of the sample to be classified according to various feature encoding modes to obtain multiple feature vectors.

Each of the above-mentioned various feature encoding modes is respectively used for reducing the sample feature dimension of the sample to be classified to feature vectors in different dimensions. The various feature encoding modes may include a Principal Component Analysis (PCA) or Linear Discriminant Analysis (LDA) feature encoding mode, an xgboost/lightgbm feature encoding mode, and a Deep Neural Network (DNN) feature encoding mode.

The feature encoding is performed on the sample feature of the sample to be classified according to the various feature encoding modes, so that dimension reduction can be performed on the sample feature of the sample to be classified. The dimensions of the feature vectors obtained after the sample to be classified is encoded by different feature encoding modes are different.

Specifically, a realizing process of performing feature encoding on the sample feature of the sample to be classified according to various feature encoding modes to obtain the multiple feature vectors may refer to a further introduction of the embodiment of the present invention, and descriptions thereof will be omitted.

In step S23, clustering analysis is performed on the multiple feature vectors to determine a target class of the sample to be classified.

Optionally, the clustering analysis is performed on the multiple feature vectors according to a Gaussian Mixed Model (GMM) to determine a target classification result of the sample to be classified.

Specifically, a realizing process of performing clustering analysis on the multiple feature vectors to determine the target class of the sample to be classified may refer to a further introduction of the embodiment of the present invention, and descriptions thereof will be omitted.

According to the above step S21 to step S23, the sample to be classified is acquired, the sample feature dimension of the sample to be classified is greater than the preset threshold, feature encoding is performed on the sample feature of the sample to be classified according to various feature encoding modes to obtain the multiple feature vectors, and clustering analysis is performed on the multiple feature vectors to determine the target class of the sample to be classified, the purpose of quickly and accurately determining the target class of the sample to be classified is achieved, and an effect of improving the accuracy of clustering of samples with high-dimensional features is achieved, thus solving the technical problem of low accuracy of clustering of the samples with high-dimensional features in the related art.

The sample classification method of the above embodiment will be further described below.

As one optional implementation, an operation S22 that feature encoding is performed on the sample feature of the sample to be classified according to the various feature encoding modes to obtain the multiple feature vectors includes the following steps.

In step S221, feature encoding is performed on the sample feature of the sample to be classified according to the PCA or LDA feature encoding mode to obtain a first feature vector.

Specifically, the feature encoding is performed on the sample feature of the sample to be classified according to the PCA or LDA feature encoding mode to obtain the first feature vector.

In step S222, feature encoding is performed on the sample feature of the sample to be classified according to the xgboost/lightgbm feature encoding mode to obtain a second feature vector.

Specifically, an xgboost/lightgbm model is pre-trained to obtain multiple trees, and weights of leaf nodes of each tree are spliced into the second feature vector.

In step S223, feature encoding is performed on the sample feature of the sample to be classified according to the DNN feature encoding mode to obtain a third feature vector.

Specifically, the third feature vector is obtained on the basis of a layer vector output by the last layer of a multilayer fully-connected neural network.

Optionally, a feature dimension of the first feature vector is less than a feature dimension of the third feature vector, and the feature dimension of the third feature vector is less than a feature dimension of the second feature vector.

For example, the feature encoding is performed on the sample feature of the sample to be classified according to the PCA or LDA feature encoding mode to obtain the first feature vector. A 10,000-dimensional sample feature can be compressed to be within 100 dimensions. That is, the dimension of the first feature vector is within 100 dimensions. The xgboost/lightgbm model is pre-trained to obtain the multiple trees, and the weights of the leaf nodes of each tree are spliced into the second feature vector. The dimension of the second feature vector is between 500 dimensions and 1,000 dimensions. The layer vector output by the last layer through the multilayer fully-connected neural network is obtained. That is, the third feature vector is obtained, and the dimension of the third feature vector is between 100 dimensions and 200 dimensions.

Based on the above step S221 to step S223, the feature encoding is performed on the sample feature of the sample to be classified according to the various feature encoding modes, and the feature dimension of the sample to be classified is compressed to obtain the feature vectors with different dimensions, including the first feature vector, the second feature vector and the third feature vector, so as to generate multiple classes from multiple perspectives and increase the generalization of a classification result.

As one optional implementation, the sample classification method according to the embodiment of the present invention further includes the following steps.

In step S24, multiple sample clusters are configured, and the multiple sample clusters are used for determining a sample cluster to which each of the multiple feature vectors belongs after the clustering analysis is performed on the multiple feature vectors.

For example, the number of sample clusters is configured to be 100. The sample clusters are sequentially numbered as cluster 1, cluster 2, cluster 3, ..., cluster 99, and cluster 100. After the clustering analysis is performed on the first feature vector, the second feature vector and the third feature vector, 100 sample clusters are respectively obtained from these three feature vectors, thus determining a sample cluster to which each of the first feature vector, the second feature vector and the third feature vector belongs.

By presetting multiple sample clusters, after the clustering analysis is performed on the multiple feature vectors, the sample cluster to which each feature vector belongs is quickly determined, thus improving the efficiency of clustering analysis.

As one optional implementation, an operation S23 that clustering analysis is performed on the multiple feature vectors to determine the target class includes the following steps.

In step S231, clustering analysis is performed on the multiple feature vectors, and a sample cluster to which each of the multiple feature vectors belongs is determined to obtain a clustering result.

Specifically, the clustering analysis is performed on the first feature vector, the second feature vector and the third feature vector according to the GMM to determine the sample cluster to which each of the first feature vector, the second feature vector and the third feature vector belongs to obtain the clustering result.

In step S232, the target class is determined from the clustering result according to a voting mechanism.

Specifically, a realizing process of determining the target class from the clustering result according to the voting mechanism may refer to a further introduction of the embodiment below, and descriptions thereof are omitted.

Based on the above step S231 to step S232, through performing the clustering analysis on the multiple feature vectors, respectively determining the sample cluster to which each of the multiple feature vectors belongs to obtain the clustering result, and determining the target class from the clustering result according to the voting mechanism, the target class corresponding to the sample to be classified can be efficiently and accurately determined.

As one optional implementation, the clustering result includes multiple candidate clusters. The multiple candidate clusters are partial or all clusters among the multiple sample clusters. An operation S232 that the target class is determined from the clustering result according to the voting mechanism includes the following steps.

In step S2321, a target cluster is selected from the multiple candidate clusters according to the voting mechanism, and the number of feature vectors contained in the target cluster is greater than the number of the feature vectors contained in each of candidate clusters except for the target cluster.

Specifically, the candidate cluster with the largest number of feature vectors is selected from the multiple candidate clusters according to the voting mechanism.

In step S2322, the target class is determined on the basis of the target cluster.

Based on the above step S2321 to step S2322, the target cluster is selected from the multiple candidate clusters according to the voting mechanism, thus determining the target class on the basis of the target cluster, so that the target class corresponding to the sample to be classified can be accurately obtained.

As one optional implementation, the clustering result includes multiple candidate clusters. The multiple candidate clusters are partial or all clusters among the multiple sample clusters. An operation S232 that the target class is determined from the clustering result according to the voting mechanism includes the following steps.

In step S2323, the number of the feature vectors contained in each of the multiple candidate clusters is determined to be the same according to the voting mechanism.

In step S2324, the target class is determined on the basis of a default cluster among the multiple of candidate clusters.

Based on the above step S2323 to step S2324, the number of the feature vectors contained in each of the multiple candidate clusters is determined to be the same according to the voting mechanism, and the target class is determined on the basis of the default cluster among the multiple candidate clusters, so that the target class corresponding to the sample to be classified can be accurately obtained.

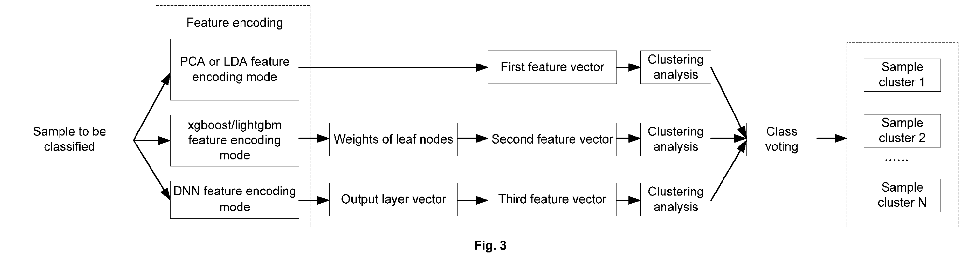

The sample classification method according to the embodiment of the present invention is described below in combination with Fig. 3.

Fig. 3 is a schematic diagram of a sample classification method according to an embodiment of the present invention. As shown in Fig. 3, a sample to be classified is acquired first, and a sample feature dimension of which is greater than a preset threshold. Feature encoding is performed on the sample to be classified according to various feature encoding modes to obtain multiple feature vectors. Specifically, the feature encoding is performed on the sample feature of the sample to be classified according to the PCA/LDA feature encoding mode to obtain a first feature vector. The feature encoding is performed on the sample feature of the sample to be classified according to the xgboost/lightgbm feature encoding mode, and weights of leaf nodes of each tree are spliced to obtain a second feature vector. The feature encoding is performed on the sample feature of the sample to be classified according to a DNN feature encoding mode, and a layer vector output by the last fully-connected layer to obtain a third feature vector. The clustering analysis is performed on the first feature vector, the second feature vector and the third feature vector according to a GMM, and a sample cluster to which each feature vector belongs is determined to obtain a clustering result. Finally, a target class of the sample to be classified is determined from the clustering result according to a voting mechanism.

For example, the clustering analysis is performed on the first feature vector, the second feature vector and the third feature vector according to the GMM. 100 candidate clusters are respectively obtained from these three feature vectors, that is, each feature vector corresponds to one class of candidate cluster. Each class of candidate cluster is sequentially numbered as cluster 1, cluster 2, cluster 3, ..., cluster 99, and cluster 100. A default cluster is cluster 0. According to the voting mechanism, in response to sample a being classified as cluster 1 in the 3 classes of clusters, a target cluster of sample a is cluster 1, and a target class of sample a is cluster 1. In response to sample a being classified as cluster 1 in the 2 classes of clusters and being classified as cluster 2 in 1 class of clusters, a target cluster of sample a is cluster 1, and a target class of sample a is cluster 1. In response to sample a is classified as cluster 1, cluster 2 and cluster 3 respectively in the 3 classes of clusters, a target class of sample a is cluster 0.

Through the sample classification method according to the embodiment of the present invention, the target class of the sample to be classified can be efficiently and accurately, and then the sample to be classified is classified into the corresponding cluster to achieve automatic clustering.

The sample classification method according to the embodiment of the present invention can be applied to a finance risk control scenario. In this scenario, a label needs to be generated for a user. For example, a label is generated according to an interest list of a user. An interest feature has a ten thousand dimension, so that the cost of manual labeling is extremely high. An interest sample of the user is classified into 100 clusters according to the sample classification method provided in the embodiment of the present invention, and manual sampling and inspection are then performed, so that labeling of a user can be accelerated, and the manual labeling cost can be effectively reduced.

In the technical solutions of the present invention, the acquisition, storage, use, processing, transmission, providing, disclosure and the like of user's personal information involved are all in compliance with the provisions of relevant laws and regulations, and do not violate public order and good customs.

Through the description of the above implementations, those skilled in the art can clearly understand that the method according to the above embodiment can be implemented by means of software and necessary general hardware platforms, of course, it can also be implemented by hardware, but in many cases, the former is better. Based on this understanding, the technical solution of the present invention essentially or the part that contributes to the existing art can be embodied in the form of a software product, and the computer software product is stored in one storage medium and includes several instructions to enable a terminal device (which can be a mobile phone, a computer, a server, or a network device, etc.) to execute the methods described in the various embodiments of the present invention.

In the present invention, a sample classification apparatus is further provided. The apparatus is used for realizing the above embodiments and preferred implementations. Those described will not be repeatedly described. As used below, the term "module" can implement a combination of software and/or hardware with predetermined functions. Although the apparatuses described in the following embodiments are preferably implemented by software, implementation by hardware or a combination of software and hardware is also possible and conceived.

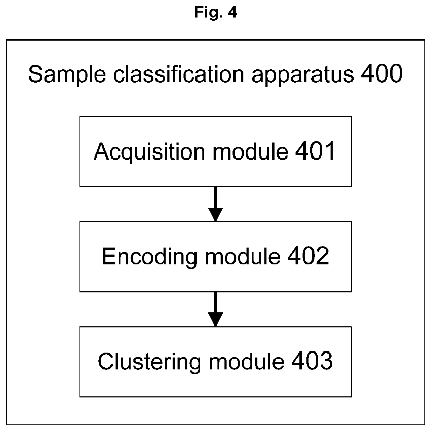

Fig. 4 is a block structural diagram of a sample classification apparatus according to an embodiment of the present invention. As shown in Fig. 4, the sample classification apparatus 400 includes:
an acquisition module 401, configured to acquire a sample to be classified, and a sample feature dimension of the sample to be classified is greater than a preset threshold;
an encoding module 402, configured to perform feature encoding on a sample feature of the sample to be classified according to various feature encoding modes to obtain multiple feature vectors; and
a clustering module 403 configured to perform clustering analysis on the multiple feature vectors to determine a target class of the sample to be classified.

Optionally, each of the various feature encoding modes is respectively used for reducing the sample feature dimension of the sample to be classified to feature vectors in different dimensions.

Optionally, the encoding module 402 is also configured to perform feature encoding on a sample feature of the sample to be classified according to a PCA or LDA feature encoding mode to obtain a first feature vector; perform feature encoding on the sample feature of the sample to be classified according to the xgboost/lightgbm feature encoding mode to obtain a second feature vector; and perform feature encoding on the sample feature of the sample to be classified according to a DNN feature encoding mode to obtain a third feature vector.

Optionally, a feature dimension of the first feature vector is less than a feature dimension of the third feature vector, and the feature dimension of the third feature vector is less than a feature dimension of the second feature vector.

Optionally, the sample classification apparatus 400 further includes a configuration module 404 configured to configure multiple sample clusters, and the multiple sample clusters are used for determining a sample cluster to which each of the multiple feature vectors belongs after the clustering analysis is performed on the multiple feature vectors.

Optionally, the clustering module 403 is also configured to perform clustering analysis on the multiple feature vectors, and respectively determine a sample cluster to which each of the multiple feature vectors belongs to obtain a clustering result; and determine the target class from the clustering result according to a voting mechanism.

Optionally, the clustering result includes multiple candidate clusters; the multiple candidate clusters are partial or all clusters among the multiple sample clusters; and the clustering module 403 is also configured to select a target cluster from the multiple candidate clusters according to the voting mechanism, and the number of feature vectors contained in the target cluster is greater than the number of the feature vectors contained in each of the multiple candidate clusters except for the target cluster; and determine the target class on the basis of the target cluster.

Optionally, the clustering result includes multiple candidate clusters; the multiple candidate clusters are partial or all clusters among the multiple sample clusters; and the clustering module 403 is also configured to: determine that the number of the feature vectors contained in each of the multiple candidate clusters is the same according to the voting mechanism; and determine the target class on the basis of a default cluster among the multiple candidate clusters.

It should be noted that all the above modules can be implemented by software or hardware. For the latter, all the above modules can be implemented by the following methods, but are not limited to this. The above-mentioned modules are all located in a same processor, or all the above-mentioned modules are respectively located in different processors in any combination form.

According to an embodiment of the present invention, the present invention further provides an electronic device, including a memory and a processor. The memory stores a computer program. The processor is configured to running the computer program to execute the steps in the above-mentioned method embodiments.

Optionally, the above-mentioned electronic device may further include a transmission device and an input or output device. The transmission device is connected with the above-mentioned processor, and the input or output device is connected with the above-mentioned processor.

Optionally, in the present invention, the processor may be configured to execute the following steps through a computer program:
S1, acquiring a sample to be classified, and a sample feature dimension of the sample to be classified is greater than a preset threshold;
S2, performing feature encoding on a sample feature of the sample to be classified according to various feature encoding modes to obtain multiple feature vectors; and
S3, performing clustering analysis on the multiple feature vectors to determine a target class of the sample to be classified.

Optionally, for specific examples in this embodiment, reference may be made to the examples described in the foregoing embodiments and optional implementations, and details are not described herein again in this embodiment.

According to an embodiment of the present invention, the present invention further provides a non-transitory computer-readable storage medium which stores at least one computer instruction. The non-transitory computer-readable storage medium stores at least one computer instruction. The at least one computer instruction, when run, is configured to execute the steps in the above-mentioned method embodiment.

Optionally, in this embodiment the above-mentioned non-transitory computer-readable storage medium may be configured to store a computer program code used for executing the following step:
S1, acquiring a sample to be classified, and a sample feature dimension of the sample to be classified is greater than a preset threshold;
S2, performing feature encoding on a sample feature of the sample to be classified according to various feature encoding modes to obtain multiple feature vectors; and
S3, performing clustering analysis on the multiple feature vectors to determine a target class of the sample to be classified.

Optionally, in this embodiment, the above-mentioned non-transitory computer-readable medium may include, but is not limited to, an electronic, magnetic, optical, electromagnetic, infrared, or semiconductor system, apparatus, or device, or any suitable combination of the above contents. More specific examples of the readable storage medium may include an electrical connection based on at least one wires, a portable computer disk, a hard disk, a Random Access MEMORY (RAM), an Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination of the above contents.

According to an embodiment of the present invention, the present invention further provides a computer program product. Program codes used for implementing an audio processing method of the present invention can be written in any combination of at least one programming languages. These program codes can be provided to processors or controllers of general-purpose computers, special-purpose computers, or other programmable data processing apparatuses, so that when the program codes are executed by the processor or controller, the functions specified in the flow charts and/or block diagrams are implemented. The program codes can be entirely or partly executed on the machine, partly executed on the machine as an independent software package, and partly executed on a remote machine, or entirely executed on the remote machine or a server.

In the above-mentioned embodiments of the present invention, the descriptions of all the embodiments have their own focuses. For parts that are not described in detail in an embodiment, reference may be made to related descriptions of other embodiments.

In the several embodiments provided by the present invention, it should be understood that the disclosed technical contents may be implemented in other manners. The apparatus embodiment described above is illustrative. For example, the division of units may be a logical function division. In actual implementation, there may be other division methods. For example, multiple units or components may be combined or integrated into another system, or some features can be ignored, or not executed. From another point of view, the mutual coupling or direct coupling or communication connection shown or discussed may be indirect coupling or communication connection through some interfaces, units or modules, and may be in electrical or other forms.

The units described as separate components may or may not be physically separated, and the components displayed as units may or may not be physical units. That is, the units may be located in one place, or the units may be distributed on multiple units. Part or all of the units may be selected according to actual needs to achieve the objectives of the solutions of the embodiments.

In addition, all functional units in all the embodiments of the present invention can be integrated into one processing unit, or each unit can physically exist alone, or two or more units can be integrated in one unit. The above integrated units can be implemented in the form of hardware, or can be implemented in the form of software functional units.

The integrated unit, when implemented in the form of a software functional unit and sold or used as a standalone product, may be stored in a computer readable storage medium. Based on this understanding, the technical solutions of the present invention essentially or parts that contribute to the existing technology or all or part of the technical solutions can be embodied in the form of a software product, and the computer software product is stored in a storage medium, including several instructions used to cause a computer device (which can be a personal computer, a server, or a network device, etc.) to execute all or part of the steps of the methods in the various embodiments of the present invention. The aforementioned storage media include: a USB flash disk, a ROM, a RAM, a mobile disk, a magnetic disk or an optical disk, and other media that can store program codes.

The above describes the exemplary embodiments of the present invention. It should be noted that those of ordinary skill in the art can further make several improvements and retouches without departing from the principles of the present invention. These improvements and retouches shall all fall within the protection scope of the present invention.

## Claims

1. A sample classification method, comprising:
acquiring a sample to be classified, wherein a sample feature dimension of the sample to be classified is greater than a preset threshold;
performing feature encoding on a sample feature of the sample to be classified according to various feature encoding modes to obtain a plurality of feature vectors; and
performing clustering analysis on the plurality of feature vectors to determine a target class of the sample to be classified.

2. The sample classification method as claimed in claim 1, wherein each of the various feature encoding modes is respectively used for reducing the sample feature dimension of the sample to be classified to feature vectors in different dimensions.

3. The sample classification method as claimed in claim 1, wherein performing feature encoding on the sample feature of the sample to be classified according to the various feature encoding modes to obtain the plurality of feature vectors comprises:
performing feature encoding on the sample feature of the sample to be classified according to a principal component analysis (PCA) or linear discriminant analysis (LDA) feature encoding mode to obtain a first feature vector;
performing feature encoding on the sample feature of the sample to be classified according to a xgboost/lightgbm feature encoding mode to obtain a second feature vector; and
performing feature encoding on the sample feature of the sample to be classified according to a deep neural network (DNN) feature encoding mode to obtain a third feature vector.

4. The sample classification method as claimed in claim 3, wherein a feature dimension of the first feature vector is less than a feature dimension of the third feature vector, and the feature dimension of the third feature vector is less than a feature dimension of the second feature vector.

5. The sample classification method as claimed in claim 1, wherein the sample classification method further comprises:
configuring a plurality of sample clusters, wherein the plurality of sample clusters are used for determining a sample cluster to which each of the plurality of feature vectors belongs after the clustering analysis is performed on the plurality of feature vectors.

6. The sample classification method as claimed in claim 5, wherein performing clustering analysis on the plurality of feature vectors to determine the target class of the sample to be classified comprises:
performing clustering analysis on the plurality of feature vectors to respectively determine a sample cluster to which each of the plurality of feature vectors belongs to obtain a clustering result; and
determining the target class from the clustering result according to a voting mechanism.

7. The sample classification method as claimed in claim 6, wherein the clustering result comprises a plurality of candidate clusters; the plurality of candidate clusters are partial or all clusters among the plurality of sample clusters; and determining the target class from the clustering result according to the voting mechanism comprises:
selecting a target cluster from the plurality of candidate clusters according to the voting mechanism, wherein the number of feature vectors contained in the target cluster is greater than the number of the feature vectors contained in each of the plurality of candidate clusters except for the target cluster; and
determining the target class on the basis of the target cluster.

8. The sample classification method as claimed in claim 6, wherein the clustering result comprises a plurality of candidate clusters; the plurality of candidate clusters are partial or all clusters among the plurality of sample clusters; and determining the target class from the clustering result according to the voting mechanism comprises:
determining that the number of the feature vectors contained in each of the plurality of candidate clusters is the same according to the voting mechanism; and
determining the target class on the basis of a default cluster among the plurality of candidate clusters.

9. A sample classification apparatus, comprising:
an acquisition module, configured to acquire a sample to be classified, wherein a sample feature dimension of the sample to be classified is greater than a preset threshold;
an encoding module, configured to perform feature encoding on a sample feature of the sample to be classified according to various feature encoding modes to obtain a plurality of feature vectors; and
a clustering module configured to perform clustering analysis on the plurality of feature vectors to determine a target class of the sample to be classified.

10. The sample classification apparatus as claimed in claim 9, wherein each of the various feature encoding modes is respectively used for reducing the sample feature dimension of the sample to be classified to feature vectors in different dimensions;
or, wherein the encoding module is also configured to:
perform feature encoding on the sample feature of the sample to be classified according to a principal component analysis (PCA) or linear discriminant analysis (LDA) feature encoding mode to obtain a first feature vector;
perform feature encoding on the sample feature of the sample to be classified according to a xgboost/lightgbm feature encoding mode to obtain a second feature vector; and
perform feature encoding on the sample feature of the sample to be classified according to a deep neural network (DNN) feature encoding mode to obtain a third feature vector;
or, wherein the sample classification apparatus further comprises:
a configuration module configured to configure a plurality of sample clusters, wherein the plurality of sample clusters are used for determining a sample cluster to which each of the plurality of feature vectors belongs after the clustering analysis is performed on the plurality of feature vectors.

11. The sample classification apparatus as claimed in claim 10, wherein a feature dimension of the first feature vector is less than a feature dimension of the third feature vector, and the feature dimension of the third feature vector is less than a feature dimension of the second feature vector;
or, wherein the clustering module is also configured to:
perform clustering analysis on the plurality of feature vectors to respectively determine a sample cluster to which each of the plurality of feature vectors belongs to obtain a clustering result; and
determine the target class from the clustering result according to a voting mechanism.

12. The sample classification method as claimed in claim 11, wherein the clustering result comprises a plurality of candidate clusters; the plurality of candidate clusters are partial or all clusters among the plurality of sample clusters; and the clustering module is also configured to:
select a target cluster from the plurality of candidate clusters according to the voting mechanism, wherein the number of feature vectors contained in the target cluster is greater than the number of the feature vectors contained in each of the plurality of candidate clusters except for the target cluster; and
determine the target class on the basis of the target cluster;
or, wherein the clustering result comprises a plurality of candidate clusters; the plurality of candidate clusters are partial or all clusters among the plurality of sample clusters; and the clustering module is also configured to:
determine that the number of the feature vectors contained in each of the plurality of candidate clusters is the same according to the voting mechanism; and
determine the target class on the basis of a default cluster among the plurality of candidate clusters.

13. An electronic device, comprising:
at least one processor; and
a memory in communication connection with the at least one processor, wherein
the memory stores at least one instruction to be executed by the at least one processor; the at least one instruction, when executed by the at least one processor, causes the at least one processor to implement the method as claimed in any one of claims 1 to 8.

14. A computer-readable storage medium storing at least one computer instruction, wherein the at least one computer instruction is used for causing a computer to implement the method as claimed in any one of claims 1 to 8.

15. A computer program product, comprising a computer program which, when executed by a processor, implements the method according to as claimed in claims 1 to 8.
